# EUROPÄISCHE PATENTSCHRIFT

(11) **EP 0 616 459 B1**
(45) Veröffentlichungstag und Bekanntmachung des Hinweises auf die Patenterteilung: **29.04.1998**
(21) Anmeldenummer: 94103467.0
(22) Anmeldetag: 08.03.1994
(51) Int. Cl.: H04M 15/28

(54) **Schaltungsanordnung zur Übertragung nachrichtentechnischer Signale**
Circuit for transmission of communication-signals
Circuit pour la transmission des signaux de communication

(30) Priorität: 19.03.1993 DE 4308783
(43) Veröffentlichungstag der Anmeldung: 21.09.1994
(73) Patentinhaber: ALCALTEL ALSTHOM Compagnie Générale d'Electricité, 75008 Paris (FR)
(72) Erfinder: Brahms, Martin, D-30457 Hannover (DE); Fritz, Wolfgang, D-30165 Hannover (DE); Klamt, Werner, D-31191 Algermissen (DE)
(74) Vertreter: Döring, Roger, Dipl.-Ing.

(56) Entgegenhaltungen:
- EP-A- 0 096 409
- US-A- 5 133 007
- PATENT ABSTRACTS OF JAPAN, unexamined applications, E Field, Band 9, Nr. 31, 9 Februar 1985 THE PATENT OFFICE JAPANESE GOVERNMENT Seite 83 E 295; & JP-A-59-175 225 (FUJITSU)

## Beschreibung

Die Erfindung bezieht sich auf eine Schaltungsanordnung zur Übertragung nachrichtentechnischer Signale zwischen einer Vermittlungsstelle eines Fernsprechnetzes und mindestens einem an dieselbe angeschlossenen Teilnehmer, mit welcher von der Vermittlungsstelle aus neben Sprachsignalen auch Gebührenimpulse übertragen werden, bei welcher der Vermittlungsstelle einerseits und dem Teilnehmer andererseits jeweils Systemeinheiten zugeordnet sind, zwischen denen die Sprachsignale als digitale Signale über eine Zweidrahtleitung übertragen werden, bei welcher in den Systemeinheiten neben Analog/Digital-Umsetzern eine Gabelschaltung mit einem Übertrager zur Verbindung eines Zweidrahtsystems mit einem Vierdrahtsystem angeordnet ist und bei welcher das die Primärwicklung des Übertragers aufweisende Zweidrahtsystem mit der Vermittlungsstelle verbunden ist, während an das die Sekundärwicklung des Übertragers aufweisende, aus einem Empfangszweig und einem Sendezweig bestehende Vierdrahtsystem die zum Teilnehmer führende Zweidrahtleitung angeschlossen ist (Technische Information "PCM4A-System" der ke Kommunikations-Elektronik GmbH & Co, Hannover, 07/91).

Eine derartige Schaltungsanordnung wird zur besseren Ausnutzung von Kupferleitungen bestehender Kabelanlagen verwendet. Bei dem bekannten Verfahren nach der im Vorangehenden beschriebenen Technischen Information sind vier Teilnehmer mit ihren Telefonen unter Zwischenschaltung der Systemeinheiten an nur eine Zweidrahtleitung angeschlossen.

Die Buchstaben "PCM" stehen für das bekannte Verfahren der Puls-Code-Modulation. Die Übertragung der Signale erfolgt hier nach Digitalisierung zwischen der Vermittlungsstelle und den Teilnehmern mit einer Übertragungsrate von 144 kbit/s als Nutzbitrate. Die analogen Sprachsignale werden dabei in der Vermittlungsstelle bzw. bei den Teilnehmern digitalisiert, über die Zweidrahtleitung übertragen und am Ende der Übertragungsstrecke wieder in analoge Sprachsignale umgesetzt. Die digitalisierten Sprachkanäle werden zwischen den Teilnehmern und der Vermittlungsstelle bzw. umgekehrt in vier Kanälen von je 32 kbit/s über die Zweidrahtleitung übertragen. Die Schaltungsanordnung ist aber auch für andere Übertragungsraten und andere Teilnehmerzahlen verwendbar.

In den Systemeinheiten ist neben anderen Bauteilen, zu denen insbesondere Analog/Digital-Umsetzer gehören, jeweils eine Gabelschaltung enthalten. Eine Gabelschaltung dient in Verbindung mit einem Übertrager zur Verbindung eines Vierdrahtsystems, das einen Sendezweig und einen Empfangszweig aufweist, mit einem Zweidrahtsystem und umgekehrt. Der Übertrager ist dabei zwischen dem Zweidrahtsystem und dem Vierdrahtsystem angeordnet.

Von der Vermittlungsstelle werden neben den analogen Sprachsignalen - im folgenden kurz "NF" genannt - auch Gebührenimpulse übertragen, die beispielsweise eine Frequenz von 16 kHz haben. Sie werden der NF überlagert. Die Gebührenimpulse werden vor der Systemeinheit herausgefiltert und getrennt von der NF über die Zweidrahtleitung übertragen.

Unabhängig von der hier nicht betroffenen Übertragung der Gebührenimpulse zum Teilnehmer muß sichergestellt sein, daß die NF-Übertragung durch dieselben nicht gestört wird. Während der NF-Pegel nämlich bei etwa 1 V liegt, haben die Gebührenimpulse einen Pegel von etwa 12 V. Sie müssen daher vor der Gabelschaltung So weit unterdrückt werden, daß sie nicht an deren analogem Eingang anstehen. Es können sonst Verzerrungen der NF hervorgerufen werden. Außerdem besteht die Gefahr, daß die in der Gabelschaltung eingesetzten Bauteile übersteuert werden.

Der Erfindung liegt die Aufgabe zugrunde, die eingangs beschriebene Schaltungsanordnung so zu gestalten, daß eine Beeinflussung der NF-Übertragung durch die Gebührenimpulse ausgeschlossen werden kann.

Diese Aufgabe wird gemäß der Erfindung dadurch gelöst,
- daß in dem Zweidrahtsystem ein aus einer Induktivität und einem Kondensator bestehender Parallelschwingkreis eingeschaltet ist,
- daß im Empfangszweig der Gabelschaltung ein passives Filter und ein aktives Filter hintereinander angeschlossen sind,
- daß das passive Filter auf die Frequenz der Gebührenimpulse eingestellt ist und
- daß als aktives Filter ein auf das passive Filter abgestimmtes Filter eingesetzt ist, das einen durch das passive Filter bewirkten Abfall des NF-Pegels durch eine entsprechende Erhöhung desselben kompensiert.

Der Parallelschwingkreis wirkt als Vorfilter. Er ist niederohmig und stört daher die NF-Übertragung nicht. Der Pegel der Gebührenimpulse wird durch den Parallelschwingkreis beispielsweise um 10 dB gedämpft. Das bedeutet eine Herabsetzung des Pegels um mindestens den Faktor "3". Damit ist sichergestellt, daß der Verstärkerausgang der Gabelschaltung nicht überlastet wird.

Das passive Filter ist auf die Frequenz der Gebührenimpulse ausgelegt, also beispielweise auf 16 kHz. Es unterdrückt die Gebührenimpulse weitestgehend. Deren Pegel wird beispielsweise auf 1/30 abgesenkt. Dieses Filter wirkt als Bandsperre. Seine Dämpfung ist für eine bestimmte Frequenz - hier 16 kHz - sehr hoch. Der Durchlaßbereich der NF hingegen - 300 bis 3400 Hz - wird nicht wesentlich beeinflußt. Das passive Filter bewirkt einen leichten Abfall des Pegels der NF zu höheren Frequenzen hin. Dieser Abfall wird durch das aktive, beispielsweise zweistufige Filter ausgeglichen, das an der Stelle des durch das passive Filter bewirkten Abfalls eine Überhöhung des Pegels aufweist. Der NF-Pegel am analogen Eingang ist damit konstant.

Ein Ausführungsbeispiel der Erfindung ist in den Zeichnungen dargestellt.

Es zeigen:
Fig. 1 schematisch eine Übertragungsstrecke digitaler Signale.
Fig. 2 die Schaltungsanordnung nach der Erfindung.
Fig. 3 und 4 Einzelheiten der Schaltungsanordnung nach Fig. 2.
Fig. 5 den Verlauf des NF-Pegels.

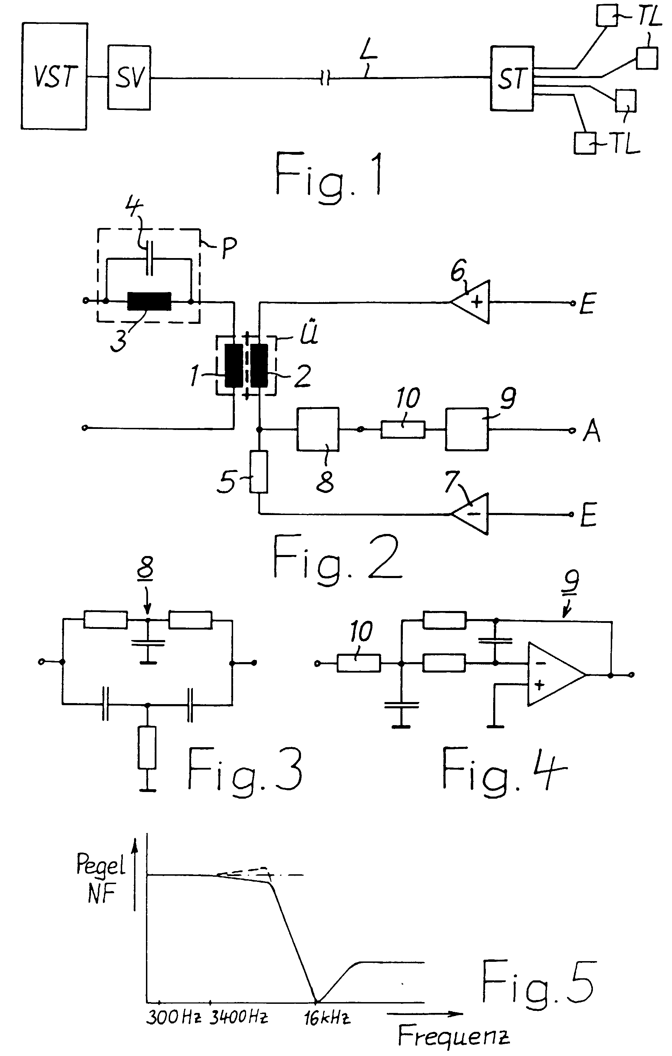

Gemäß Fig. 1 sind an eine Vermittlungsstelle VST eines Fernsprechnetzes vier Teilnehmer TL angeschlossen. Die nachrichtentechnischen Signale werden zwischen zwei Systemeinheiten SV und ST als digitale Signale über eine Zweidrahtleitung L übertragen. Auf den analogen Seiten der Systemeinheiten SV und ST sind die Vermittlungsstelle VST einerseits und die Teilnehmer TL andererseits angeschlossen.

In der Systemeinheit SV befindet sich neben einem A/D-Umsetzer und anderen Bauteilen eine Gabelschaltung, wie sie beispielsweise aus Fig. 2 hervorgeht. Diese Gabelschaltung weist einen Übertrager Ü auf, der durch eine gestrichelte Linie umrandet ist. Der Übertrager Ü hat eine Primärwicklung 1 und eine Sekundärwicklung 2. An die Primärwicklung 1 ist ein Zweidrahtsystem angeschlossen, das mit der Vermittlungsstelle VST verbunden ist. In das Zweidrahtsystem ist ein aus einer Induktivität 3 und einem Kondensator 4 bestehender, gestrichelt umrandeter Parallelschwingkreis P eingeschaltet.

An die Sekundärwicklung 2 des Übertragers Ü ist ein Vierdrahtsystem angeschlossen, das aus einem Sendezweig und einem Empfangszweig besteht. In Reihe mit der Sekundärwicklung 2 liegt eine Nachbildung 5 zur reflexionsfreien Anpassung des Übertragers Ü. Die Sekundärwicklung 2 liegt symmetrisch im Sendezweig, in welchen Verstärker 6 und 7 eingeschaltet sind. Das digitale Sendesignal wird am Eingang E des Sendezweiges in denselben eingespeist.

Der Empfangszweig des Vierdrahtsystems besteht im wesentlichen aus einem passiven Filter 8 und einem in Reihe mit demselben liegenden aktiven Filter 9. Durch einen zum Filter 9 gehörenden hochohmigen Widerstand 10 ist ein hochohmiger Abschluß des Filters 8 gegeben, der für dessen Funktion wichtig ist. Am Ausgang A des Vierdrahtsystems steht das analoge Sprachsignal mit konstantem Pegel an.

Das passive Filter 8 ist vorzugsweise als Doppel-T-Filter ausgeführt, so wie es aus Fig. 3 hervorgeht. Es ist auf 16 kHz ausgelegt und unterdrückt die Gebührenimpulse weitgehendst. Es handelt sich also um eine Bandsperre mit sehr hoher Dämpfung, die aber den Durchlaßbereich der NF nicht wesentlich beeinflußt. Zu höheren Frequenzen hin fällt der Pegel der NF wegen des passiven Filters 8 etwas ab, so wie es mit der ausgezogenen Kurve aus Fig. 5 hervorgeht. Der Abfall des NF-Pegels wird durch das aktive Filter 9 kompensiert. Das Filter 9 ist in bevorzugter Ausführungsform mindestens zweistufig ausgeführt siehe Fig. 4. Es ist auf das passive Filter 8 abgestimmt und erzeugt entsprechend der in Fig. 5 gestrichelt eingezeichneten Linie an der Stelle eine Überhöhung des NF-Pegels, an welcher das passive Filter 8 einen Abfall desselben bewirkt. Der damit am Ausgang A des Vierdrahtsystems konstante NF-Pegel ist in Fig. 5 strichpunktiert eingezeichnet.

## Patentansprüche

1. Schaltungsanordnung zur Übertragung nachrichtentechnischer Signale zwischen einer Vermittlungsstelle (VST) eines Fernsprechnetzes und mindestens einem an dieselbe angeschlossenen Teilnehmer (TL), mit welcher von der Vermittlungsstelle aus neben Sprachsignalen auch Gebührenimpulse übertragen werden, bei welcher der Vermittlungsstelle einerseits und dem Teilnehmer andererseits jeweils Systemeinheiten (SV ; ST) zugeordnet sind, zwischen denen die Sprachsignale als digitale Signale über eine Zweidrahtleitung (L) übertragen werden, bei welcher in den Systemeinheiten neben Analog/Digital-Umsetzern eine Gabelschaltung mit einem Übertrager (Ü) zur Verbindung eines Zweidrahtsystems mit einem Vierdrahtsystem angeordnet ist und bei welcher das die Primärwicklung (1) des Übertragers aufweisende Zweidrahtsystem mit der Vermittlungsstelle verbunden ist, während an das die Sekundärwicklung (2) des Übertragers aufweisende, aus einem Empfangszweig (A) und einem Sendezweig (E) bestehende Vierdrahtsystem die zum Teilnehmer führende Zweidrahtleitung angeschlossen ist, dadurch gekennzeichnet,
- daß in dem Zweidrahtsystem ein aus einer Induktivität (3) und einem Kondensator (4) bestehender Parallelschwingkreis (P) eingeschaltet ist,
- daß im Empfangszweig der Gabelschaltung ein passives Filter (8) und ein aktives Filter (9) hintereinander angeschlossen sind,
- daß das passive Filter (8) auf die Frequenz der Gebührenimpulse eingestellt ist und
- daß als aktives Filter (9) ein auf das passive Filter (8) abgestimmtes Filter eingesetzt ist, das einen durch das passive Filter (8) bewirkten Abfall des Pegels der Sprachsignale durch eine entsprechende Erhöhung desselben kompensiert.

2. Schaltungsanordnung nach Anspruch 1, dadurch gekennzeichnet, daß als passives Filter (8) ein Doppel-T-Filter verwendet wird.

3. Schaltungsanordnung nach Anspruch 1 oder 2, dadurch gekennzeichnet, daß als aktives Filter (9) ein mindestens zweistufiges Filter verwendet wird.

## Claims

1. A switching device for transmitting telecommunication signals between an exchange (VST) of a telephone network and at least one subscriber (TL) connected thereto, with which metering pulses in addition to voice signals can also be transmitted by the exchange, in which the exchange on the one hand, and the subscriber on the other, are each allocated system units (SV, ST), between which the voice signals are transmitted as digital signals via a two-wire line (L), in which the system units, in addition to analog/digital converters, have a hybrid switching unit with a transformer (Ü) for connecting a two-wire system to a four-wire system, and in which the two-wire system containing the primary winding (1) of the transformer is connected to the exchange, while the two-wire line leading to the subscriber is connected to a four-wire system, consisting of a transmitting branch (A) and a receiving branch (E), and containing the secondary winding (2) of the transformer,
**characterized in**
- that the two-wire system contains a parallel resonant circuit (P), which consists of an inductance (3) and a capacitor (4),
- that a passive filter (8) and an active filter (9) are connected in series in the receiving branch of the hybrid switching unit,
- that the passive filter (8) is tuned for attenuating the pulse frequency and
- that the active filter (9) is tuned to the passive filter (8), so as to compensate for a decrease in the level of the voice signals caused by the passive filter (8), by generating a corresponding increase in the voice signal.

2. A switching device according to claim 1, **characterized in** that a double-T filter is used as the passive filter (8).

3. A switching device according to claim 1 or 2, **characterized in** that a filter having at least two stages is used as the active filter (9).

## Revendications

1. Disposition de câblage pour la transmission de signaux de télécommunication entre un bureau central (VST) d'un réseau téléphonique et au moins un abonné (TL) relié à ce bureau; disposition qui transmet depuis le bureau central non seulement des signaux vocaux, mais également des impulsions de métrage; disposition dans laquelle des unités de système (SV, ST) sont attribuées au bureau central, d'une part, et à l'abonné, d'autre part, et entre lesquelles les signaux vocaux sont transmis sous forme de signaux numériques par un câble à deux fils (L); disposition pour laquelle les unités de système comportent, en plus du convertisseur analogique-numérique, un termineur avec un répétiteur (Ü) pour relier un système à deux fils à un système à quatre fils et pour laquelle le système à deux fils comportant l'enroulement du circuit primaire (1) du répétiteur est relié au bureau central, tandis que le câble à deux fils allant à l'abonné est branché sur le système à quatre fils composé d'une branche de réception (A) et d'une branche d'émission (E) et comportant l'enroulement secondaire (2) du répétiteur, caractérisée par le fait que:
- le système à deux fils comporte un circuit oscillant parallèle (P) composé d'une inductance (3) et d'un condensateur (4),
- un filtre passif (8) et un filtre actif (9) sont branchés en série dans la branche de réception du termineur,
- le filtre passif (8) est réglé sur la fréquence des impulsions de métrage et
- le filtre actif (9) est un filtre syntonisé avec le filtre passif (8) et permet de compenser la baisse de niveau des signaux vocaux provoquée par le filtre passif (8) en augmentant ce niveau en conséquence.

2. Disposition de câblage selon revendication 1, caractérisée par le fait que le filtre passif (8) utilisé est un filtre en double T.

3. Disposition de câblage selon revendication 1 ou 2, caractérisée par le fait que le filtre actif (9) utilisé est un filtre comportant au moins deux étages.
